# EUROPEAN PATENT SPECIFICATION

(11) **EP 3 597 896 B1**
(45) Date of publication and mention of the grant of the patent: **09.04.2025**
(21) Application number: 19187129.2
(22) Date of filing: 18.07.2019
(51) Int. Cl.: F02K 3/06, B64D 27/14

(54) **BOUNDARY LAYER INGESTING FAN**
GRENZSCHICHTFAN
SOUFFLANTE D'INGESTION DE COUCHE LIMITE

(30) Priority: 18.07.2018 US 201816038320
(43) Date of publication of application: 22.01.2020
(73) Proprietor: RTX Corporation, Farmington, CT 06032 (US)
(72) Inventor: ZYSMAN, Steven H., Amston, CT 06231-1505 (US)
(74) Representative: Dehns

(56) References cited:
- US-A- 3 870 434
- US-A- 4 124 330
- US-A1- 2017 138 370

## Description

### BACKGROUND

Conventional aircraft architecture includes wing mounted gas turbine engines. Alternate aircraft architectures mount the gas turbine engines atop the fuselage or on opposite sides of the aircraft fuselage adjacent to a surface. Accordingly, a portion of an engine fan may ingest portions of a boundary layer of airflow while other portions of the fan spaced apart from the aircraft surface may not encounter boundary layer flow. Differences in airflow characteristics across different parts of the fan can impact fan efficiency.

US 9 200 594 discloses a fan assembly according to the preamble of claim 1, and a gas turbine engine according to the preamble of claim 4. US 4 124 330 A discloses a cam-operated pitch-change apparatus and US 2017/138370 A1 discloses a pitch range for a variable pitch fan.

### SUMMARY

According to a first aspect of the present invention, there is provided a fan assembly for a gas turbine engine as set forth in claim 1.

According to a further aspect of the present invention, there is provided a gas turbine engine as set forth in claim 4.

According to a further aspect of the present invention, there is provided a method as set forth in claim 8.

Embodiments of the disclosure are set forth in the dependent claims.

These and other features disclosed herein can be best understood from the following specification and drawings, the following of which is a brief description.

### BRIEF DESCRIPTION OF THE DRAWINGS

Figure 1 is a schematic view of an aircraft.
Figure 2 is a schematic view of a portion of the aircraft and a propulsion system.
Figure 3 is a schematic representation of an incoming airflow velocities.
Figure 4 is a schematic view of fan blade pitch and incidence angle.
Figure 5 is a schematic view of another fan blade pitch and incidence angle.
Figure 6 is a schematic cross-section of an example fan assembly.
Figure 7 is a graph illustrating fan pitch angle relative to a circumferential position.
Figure 8 is a schematic cross-section of another example fan assembly.

### DETAILED DESCRIPTION

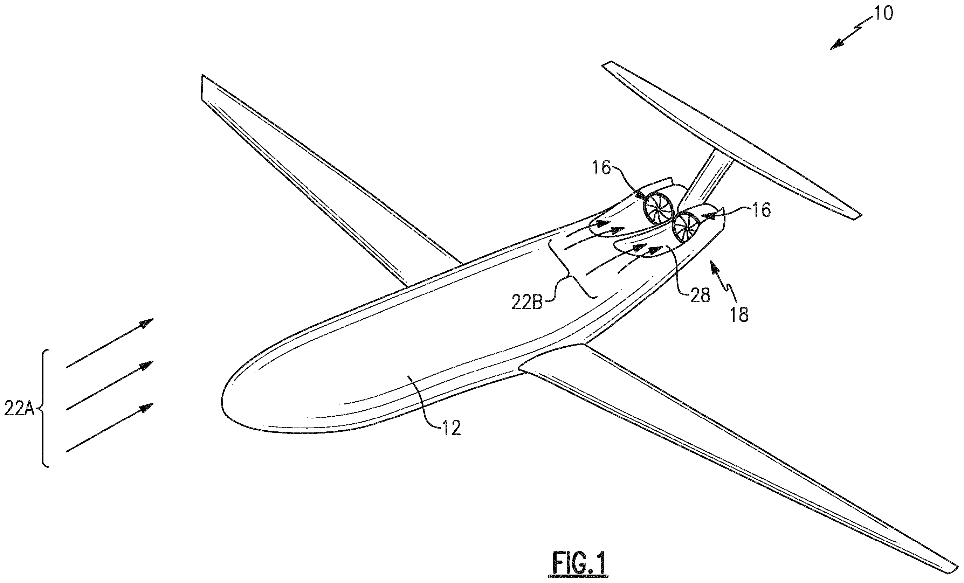

Referring to the Figure 1, an aircraft 10 includes a fuselage 12 and a propulsion system 18 mounted within an aft end of the fuselage 12. The example propulsion system 18 includes first and second gas turbine engines (not shown) that drive corresponding fan assemblies 16.

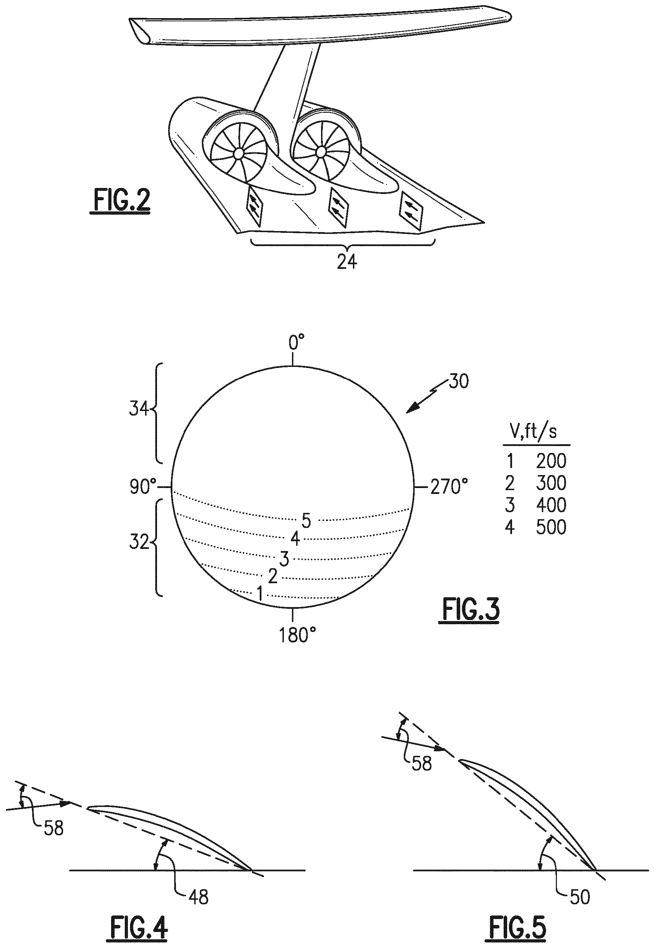

Referring to Figure 2 with continued reference to Figure 1, the propulsion system ingests airflow 22B within each fan assembly 16. Because the propulsion system 18 is mounted within and at the aft end of the fuselage 12, the fan assemblies 16 ingest boundary layer airflow schematically shown at 24. Each fan assembly 16 is partially surrounded by a nacelle 26. A portion of the fan assembly 16 not surrounded by the nacelle 26 is disposed aft of a surface 28 of the fuselage 12. Due to boundary layer development along fuselage 12 and surface 28 airflow along and above surface 28 includes varying airflow velocity 24 that is less than airflow velocity 22A which is equal to aircraft speed. This varying airflow velocity creates a non-uniform flow-field entering the fan assembly 16 that results in non-optimal incidence angles for at least some of the fan blades 20. Conventional jet engine fans are designed to receive uniform flow, as in 22A.

The pitch angle for each fan blade 20 is conventionally the same for fan assemblies 16 not subject to non-uniform airflow velocities. As appreciated, in a conventional nacelle mounted engine, the flow field is substantially uniform and therefore a single blade pitch angle for each fan blade can be utilized and optimized.

Referring to Figures 3, with continued reference to Figure 2, a representation of airflow velocities within the circumference of the fan assembly 16 is indicated at 30 and relates airflow to an angular position within the circumference of the fan 16. The fan assemblies 16 are mounted adjacent to surfaces of the fuselage 12 and therefore encounter non-uniform airflow velocities that vary within a circumferential region of the fan inlet area. The airflow velocities vary in a way corresponding with proximity to or distance from the surface 28 of the fuselage 12. The closer to the surface 28, the slower the airflow. The further away from the surface 28, the higher the airflow velocity. The non-uniform airflow velocities create different regions including a lower velocity region schematically shown at 32 and a higher velocity region 34. The differences in inlet airflow velocities result in differing output velocities of airflow.

The disclosed fan assembly 16 includes a mechanism to adjust the pitch of each fan blade 20 depending on a circumferential position in order to provide the proper blade pitch corresponding to the incoming airflow velocity vector. The incoming airflow velocity vector is the resultant vector of the blade rotation and airflow speed. The resulting outlet airflow field then becomes more uniform and efficient. The fan will also see less mechanical stress and vibration.

Referring to Figures 4 and 5 with continued reference to Figure 3, each blade 20 is moved from a lower pitch angle 48 (Figure 4) to a higher pitch angle 50 (Figure 5) depending on the incoming airflow incidence 58, where an incidence angle 58 is defined as the angle between the chord line of the blade and the direction of incoming airflow. Airflow at higher velocities and higher incidence angle 58 such as those shown in region 34 in Figure 3 do not require the fan blades to perform as much work as those within the region 32 of lower airflow velocities in order to obtain a uniform output flow. In other words, the higher pitch angle 50 performs more work to generate the exhaust flow than that of the lower pitch angle 48. However, the lower pitch angle 48 is provided in regions 34 with higher incoming airflow velocity such that overall airflow exiting the fan assembly 16 to provide the desired thrust is more uniform about the circumferences of the fan assembly 16. The change in pitch angle also optimized blade incidence angle 58 which maximizes fan efficiency.

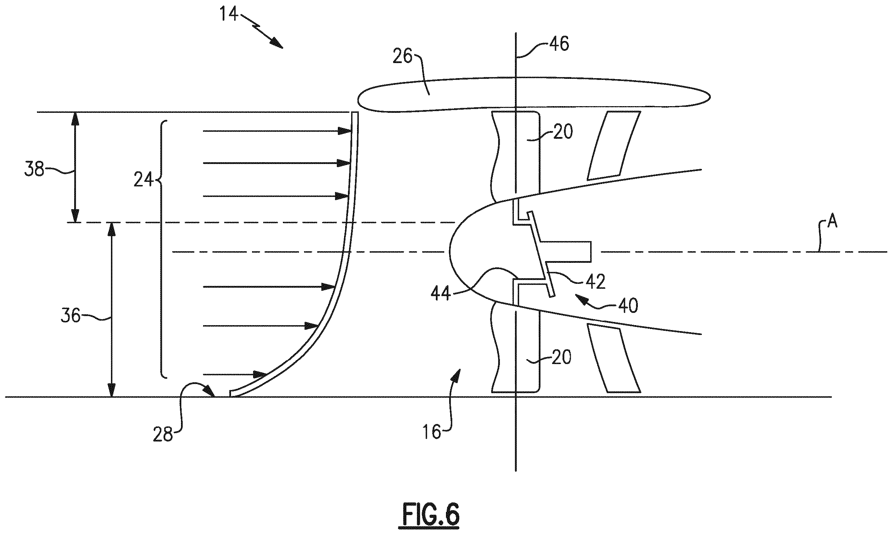

Referring to Figure 6, the disclosed fan assembly 16 includes a plurality of the fan blades 20 that rotate about the fan rotation axis A. Each of the plurality of fan blades 20 are also rotatable about an axis 46 transverse to the axis A to adjust a pitch angle. The pitch angle is automatically adjusted depending on a circumferential position of the fan blade 20 to accommodate the varying airflow incidence angles of the airflow field that is shown schematically and indicated at 14. The varying airflow field is schematically shown with a front of the flow field shown in Figure 6.

The disclosed fan assembly 16 includes a pitch change mechanism 40 that includes a swashplate 42 that is coupled to pivot mechanism 44 for each of the plurality of fan blades 20. The swashplate 42 moves each of the fan blades 20 to adjust a pitch angle as it rotates about the axis A. The pitch angle is increased as each blade 20 moves into the boundary layer region schematically shown at 36 and decreased as the blade 20 moves back into the region 38 that is not subject reduced airflow velocities and boundary layer airflow influence.

The swashplate 42 is a mechanical means of automatically changing the pitch angle for each of the plurality of fan blades separately during rotation about the axis A. No further control or adjustment is provided. Instead, the swashplate sets a defined pitch angle for each circumferential position about the axis A.

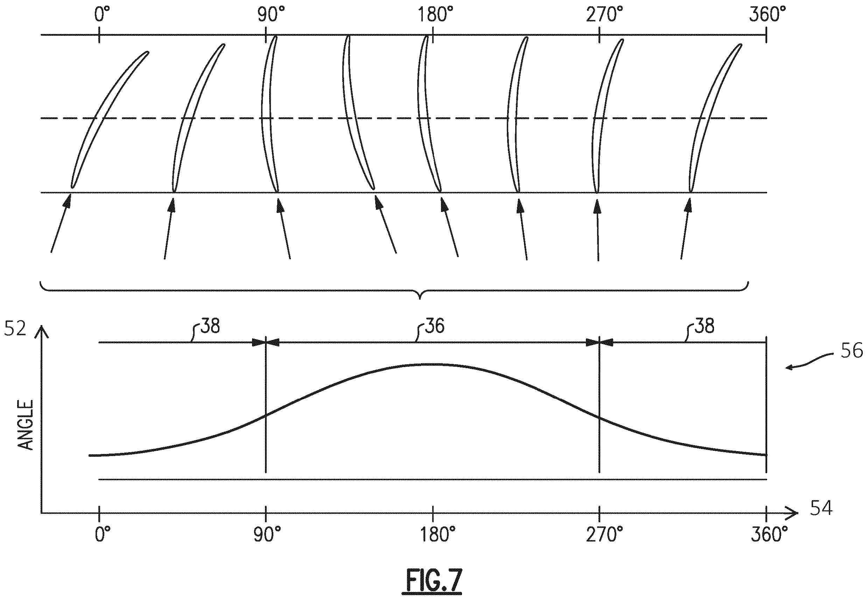

Referring to Figure 7 with continued reference to Figure 6, variation of the pitch angle 52 at a circumferential position 54 is illustrated in graph 56. The pitch angle 52 varies for each of the plurality of fan blades 20 depending on a circumferential position of each specific fan blade 20. For example, a fan blade 20 at the top center position indicated as the 0 degree position in graph 56 will have a first pitch angle. A fan blade 20 at or near the bottom position indicated as 180 degrees will have a second different and higher pitch angle. The circumferential position 54 of each of the fan blades 20 corresponds with the regions of higher and lower airflow velocities. For example, the boundary layer region 36 includes airflows of lower velocities and correspond with higher pitch angles 52. The other regions away from the boundary layer as shown at 38 correspond with lower pitch angles 52.

Accordingly, the fan blades 20 each cycle through the different pitch angles for each of the different circumferential positions about the axis A. The variations in pitch angles match each fan blade to the incoming airflow velocities to provide a uniform blade incidence angle, and thus a higher fan efficiency and more uniform exhaust flow.

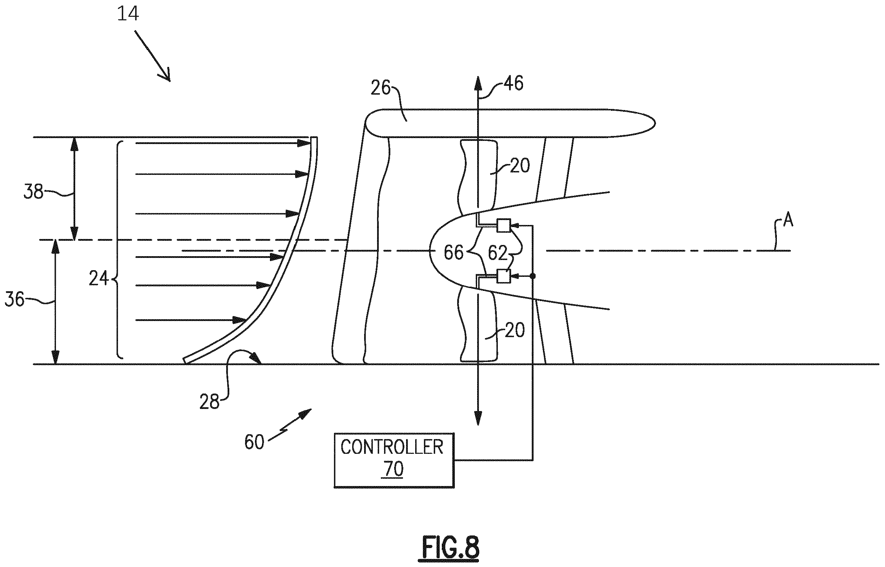

Referring to Figure 8, another fan assembly 60 is shown and includes motors 62 that are controllable by a controller 70 to drive a pitch mechanism 66 coupled to each of the fan blades 20 for rotating the blades about the axis 46 to adjust a pitch angle. In this embodiment the motors 62 are electric motors, but other motors as are known could be utilized and are within the contemplation of this disclosure. The pitch angle is adjusted depending on the incoming airflow velocities corresponding to a circumferential position. The blade pitch is adjusted accordingly based on the circumferential position to provide a more uniform exhaust airflow.

It should be understood, that although pitch mechanism have been disclosed and described by way of example, that other control systems and mechanisms for adjusting the pitch angle of each fan blade based on a circumferential positon could be utilized.

Accordingly, the fan assembly includes features for adjusting a fan blade pitch angle to correspond with a non-uniform incoming airflow velocity field to increase fan efficiency and provide a more uniform exhaust flow.

Although an embodiment has been disclosed, a worker of ordinary skill in this art would recognize that certain modifications would come within the scope of this disclosure. For that reason, the following claims should be studied to determine the scope and content of this disclosure.

## Claims

1. A fan assembly (16) for gas turbine engine (18) comprising;
a plurality of fan blades (20) rotatable about a fan rotation axis (A), each of the plurality of fan blades (20) movable about an axis (46) transverse to the fan rotation axis (A) to vary the angle of pitch (48, 50) of the fan blades (20);
a fan nacelle (26) partially surrounding the plurality of fan blades (20); and
a pitch mechanism (40, 66) coupled to the plurality of fan blades (20) that changes the angle of pitch (48, 50) for each of the plurality of fan blades (20) corresponding to a circumferential position of the fan blade about the fan rotation axis (A), **characterised in that** the fan assembly (16) further comprises:
a flow surface (28) forward of the fan nacelle (26) for only a portion of the circumference of the fan assembly (16), wherein the angle of pitch (48, 50) of one of the plurality of fan blades (20) at a circumferential position within the portion of the circumference of the fan assembly (16) including the flow surface (28) forward of the fan nacelle (26) is greater than the angle of pitch (48, 50) for ones of the plurality of fan blades (20) at a circumferential position outside the portion of the circumference.

2. The fan assembly (16) as recited in claim 1, wherein the angle of pitch (48, 50) for at least two of the plurality of fan blades (20) is always different than any other of the plurality of fan blades (20) during operation.

3. The fan assembly (16) as recited in any preceding claim, wherein the angle of pitch (48, 50) for each of the plurality of fan blades (20) cycles between a first angle of pitch (48, 50) that is greater than a second angle of pitch (48, 50) for each rotation about the fan rotational axis (A).

4. A gas turbine engine (18) comprising:
a fan section (16) including a plurality of fan blades (20) rotatable about an axis of rotation (A);
a fan nacelle (26) surrounding a portion of the plurality of fan blades (20); and
a pitch mechanism (40, 66) coupled to each of the plurality of fan blades (20);
**characterised in that** the gas turbine engine (18) further comprises:
a surface (28) forward of the fan nacelle (26) corresponding with a region of lower ingested airflow velocities (36), wherein the pitch mechanism (40, 66) changes the pitch angle (48, 50) for each of the plurality of fan blades (20) individually corresponding to ingested airflow velocity (22B) corresponding to a circumferential region of fan section (16), wherein the pitch mechanism (40, 66) increases the pitch angle (48, 50) of one of the plurality of fan blades (20) entering a first portion of the circumferential region, and wherein the pitch angle (48, 50) for each of the plurality of fan blades (20) is increased for regions of lower ingested airflow velocities (32) and decreased for regions of increased ingested airflow velocities (34).

5. The fan assembly (16) or gas turbine engine (18) as recited in any preceding claim, wherein the pitch mechanism (40) comprises a swashplate (42) coupled to pivoting mechanisms (44) for each of the plurality of fan blades (20), optionally wherein the pivoting mechanisms (44) are coupled to each of the plurality of fan blades (20).

6. The fan assembly (16) or gas turbine engine (18) as recited in any of claims 1 to 4, wherein the pitch mechanism (66) comprises a plurality of electric motors (62) coupled to a pivoting mechanism coupled to each of the plurality of fan blades (20).

7. The fan assembly (16) or gas turbine engine (18) as recited in any preceding claim, wherein the pitch mechanism (40, 66) can change the pitch of the plurality of fan blades (20) to a uniform negative value to produce reverse thrust.

8. A method of operating a gas turbine engine (18) mounted within an aircraft fuselage (12), the method comprising:
changing a pitch angle (48, 50) for each of a plurality of fan blades (20) rotating into a lower airflow velocity region (32) during rotation about a rotational axis (A); and
changing the pitch angle for each of the plurality of fan blades (20) rotating into a higher airflow velocity region (34) during rotation about rotational axis (A), wherein the lower airflow velocity region (32) comprises a boundary layer airflow (24) ingested into a fan within a partial circumferential region of the fan.

9. The method as recited in claim 8, wherein a pitch mechanism (40) changes the pitch angle (48, 50) to correspond with a circumferential position of the fan blade.

10. The method as recited in any of claims 8 or 9, wherein a or the pitch mechanism (40) changes the pitch angle (58) to correspond with a detected airflow velocity within a circumferential region of the fan.

## Patentansprüche

1. Fanbaugruppe (16) für ein Gasturbinentriebwerk (18), umfassend;eine Vielzahl von Fanschaufeln (20), die um eine Fanrotationsachse (A) rotieren kann, wobei jede der Vielzahl von Fanschaufeln (20) um eine Achse (46) bewegbar ist, die quer zu der Fanrotationsachse (A) verläuft, um den Anstellwinkel (48, 50) der Fanschaufeln (20) zu variieren;
eine Fangondel (26), die die Vielzahl von Fanschaufeln (20) teilweise umgibt; und
einen Anstellmechanismus (40, 66), der an die Vielzahl von Fanschaufeln (20) gekoppelt ist, der den Anstellwinkel (48, 50) für jede der Vielzahl von Fanschaufeln (20) entsprechend einer Umfangsposition der Fanschaufel um die Fanrotationsachse (A) ändert, **dadurch gekennzeichnet, dass** die Fanbaugruppe (16) ferner Folgendes umfasst:
eine Strömungsfläche (28) vor der Fangondel (26) für nur einen Abschnitt des Umfangs der Fanbaugruppe (16), wobei der Anstellwinkel (48, 50) einer der Vielzahl von Fanschaufeln (20) an einer Umfangsposition innerhalb des Abschnitts des Umfangs der Fanbaugruppe (16), der die Strömungsfläche (28) vor der Fangondel (26) beinhaltet, größer ist als der Anstellwinkel (48, 50) für eine der Vielzahl von Fanschaufeln (20) an einer Umfangsposition außerhalb des Abschnitts des Umfangs.

2. Fanbaugruppe (16) nach Anspruch 1, wobei der Anstellwinkel (48, 50) für mindestens zwei der Vielzahl von Fanschaufeln (20) während des Betriebs stets anders ist als für alle anderen der Vielzahl von Fanschaufeln (20).

3. Fanbaugruppe (16) nach einem der vorhergehenden Ansprüche, wobei der Anstellwinkel (48, 50) für jede der Vielzahl von Fanschaufeln (20) bei jeder Rotation um die Fanrotationsachse (A) zwischen einem ersten Anstellwinkel (48, 50), der größer ist als ein zweiter Anstellwinkel (48, 50), wechselt.

4. Gasturbinentriebwerk (18), umfassend:
einen Fanbereich (16), der eine Vielzahl von Fanschaufeln (20) beinhaltet, die um eine Rotationsachse (A) rotieren kann;
eine Fangondel (26), die einen Abschnitt der Vielzahl von Fanschaufeln (20) umgibt; und
einen Anstellmechanismus (40, 66), der an jede der Vielzahl von Fanschaufeln (20) gekoppelt ist;
**dadurch gekennzeichnet, dass** das Gasturbinentriebwerk (18) ferner Folgendes umfasst:
eine Fläche (28) vor der Fangondel (26), die einer Region mit niedrigeren Ansaug-Luftstromgeschwindigkeiten (36) entspricht, wobei der Anstellmechanismus (40, 66) den Anstellwinkel (48, 50) für jede der Vielzahl von Fanschaufeln (20) einzeln entsprechend der Ansaug-Luftstromgeschwindigkeit (22B) entsprechend einer Umfangsregion des Fanbereichs (16) ändert, wobei der Anstellmechanismus (40, 66) den Anstellwinkel (48, 50) einer der Vielzahl von Fanschaufeln (20) vergrößert, die in einen ersten Abschnitt der Umfangsregion eintritt, und wobei der Anstellwinkel (48, 50) für jede der Vielzahl von Fanschaufeln (20) für Regionen mit niedrigeren Ansaug-Luftstromgeschwindigkeiten (32) vergrößert und für Regionen mit erhöhten Ansaug-Luftstromgeschwindigkeiten (34) verringert wird.

5. Fanbaugruppe (16) oder Gasturbinentriebwerk (18) nach einem der vorhergehenden Ansprüche, wobei der Anstellmechanismus (40) eine Taumelscheibe (42) umfasst, die an Schwenkmechanismen (44) für jede der Vielzahl von Fanschaufeln (20) gekoppelt ist, wobei optional die Schwenkmechanismen (44) an jede der Vielzahl von Fanschaufeln (20) gekoppelt sind.

6. Fanbaugruppe (16) oder Gasturbinentriebwerk (18) nach einem der Ansprüche 1 bis 4, wobei der Anstellmechanismus (66) eine Vielzahl von Elektromotoren (62) umfasst, die an einen Schwenkmechanismus gekoppelt ist, der an jede der Vielzahl von Fanschaufeln (20) gekoppelt ist.

7. Fanbaugruppe (16) oder Gasturbinentriebwerk (18) nach einem der vorhergehenden Ansprüche, wobei der Anstellmechanismus (40, 66) das Anstellen der Vielzahl von Fanschaufeln (20) auf einen gleichmäßigen negativen Wert ändern kann, um einen Umkehrschub zu erzeugen.

8. Verfahren zum Betreiben eines Gasturbinentriebwerks (18), das innerhalb eines Flugzeugrumpfs (12) montiert ist, wobei das Verfahren Folgendes umfasst:
Ändern eines Anstellwinkels (48, 50) für jede einer Vielzahl von Fanschaufeln (20), die während der Rotation um eine Rotationsachse (A) in eine Region (32) mit niedrigerer Luftstromgeschwindigkeit rotieren; und
Ändern des Anstellwinkels für jede der Vielzahl von Fanschaufeln (20), die während der Rotation um die Rotationsachse (A) in eine Region (34) mit höherer Luftstromgeschwindigkeit rotieren, wobei die Region (32) mit niedrigerer Luftstromgeschwindigkeit einen Grenzschichtluftstrom (24) umfasst, der in einen Fan innerhalb einer teilweisen Umfangsregion des Fans angesaugt wird.

9. Verfahren nach Anspruch 8, wobei ein Anstellmechanismus (40) den Anstellwinkel (48, 50) ändert, damit er einer Umfangsposition der Fanschaufel entspricht.

10. Verfahren nach Anspruch 8 oder 9, wobei ein oder der Anstellmechanismus (40) den Anstellwinkel (58) ändert, damit er einer detektierten Luftstromgeschwindigkeit innerhalb einer Umfangsregion des Fans entspricht.

## Revendications

1. Ensemble de soufflante (16) de moteur à turbine à gaz (18) comprenant ;
une pluralité d'aubes de soufflante (20) rotatives autour d'un axe de rotation de soufflante (A), chacune de la pluralité d'aubes de soufflante (20) étant mobile autour d'un axe (46) transversal à l'axe de rotation de soufflante (A) pour faire varier l'angle de pas (48, 50) des aubes de soufflante (20) ; une nacelle de soufflante (26) entourant partiellement la pluralité d'aubes de soufflante (20) ; et
un mécanisme de pas (40, 66) couplé à la pluralité de aubes de soufflante (20) qui modifie l'angle de pas (48, 50) pour chacune de la pluralité de aubes de soufflante (20) correspondant à une position circonférentielle de l'aube de soufflante autour de l'axe de rotation de la soufflante (A), **caractérisé en ce que** l'ensemble soufflante (16) comprend également :
une surface d'écoulement (28) en avant de la nacelle de soufflante (26) pour seulement une partie de la circonférence de l'ensemble soufflante (16), dans lequel l'angle de pas (48, 50) d'une aube de soufflante parmi la pluralité d'aubes de soufflante (20) à une position circonférentielle à l'intérieur de la partie de la circonférence de l'ensemble soufflante (16) comportant la surface d'écoulement (28) en avant de la nacelle de soufflante (26) est supérieur à l'angle de pas (48, 50) pour certaines de la pluralité d'aubes de soufflante (20) à une position circonférentielle à l'extérieur de la partie de la circonférence.

2. Ensemble de soufflante (16) tel que cité dans la revendication 1, dans lequel l'angle de pas (48, 50) pour au moins deux de la pluralité d'aubes de soufflante (20) est toujours différent de n'importe quelle autre aube de la pluralité d'aubes de soufflante (20) pendant le fonctionnement.

3. Ensemble de soufflante (16) tel que décrit dans l'une quelconque des revendications précédentes, dans lequel l'angle de pas (48, 50) pour chacune de la pluralité d'aubes de soufflante (20) oscille entre un premier angle de pas (48, 50) qui est supérieur à un second angle de pas (48, 50) pour chaque rotation autour de l'axe de rotation de la soufflante (A).

4. Moteur à turbine à gaz (18) comprenant :
une section de soufflante (16) comportant une pluralité d'aubes de soufflante (20) pouvant tourner autour d'un axe de rotation (A) ;
une nacelle de soufflante (26) entourant une partie de la pluralité d'aubes de soufflante (20) ; et
un mécanisme de pas (40, 66) couplé à chacune de la pluralité d'aubes de soufflante (20) ;
**caractérisé en ce que** le moteur à turbine à gaz (18) comprend également :
une surface (28) à l'avant de la nacelle de soufflante (26) correspondant à une région de vitesses de flux d'air ingéré inférieures (36), dans lequel le mécanisme de pas (40, 66) modifie l'angle de pas (48, 50) pour chacune de la pluralité d'aubes de soufflante (20) correspondant individuellement à la vitesse de flux d'air ingéré (22B) correspondant à une région circonférentielle de la section de soufflante (16), dans laquelle le mécanisme de pas (40, 66) augmente l'angle de pas (48, 50) d'une de la pluralité d'aubes de soufflante (20) entrant dans une première partie de la région circonférentielle, et dans laquelle l'angle de pas (48, 50) pour chacune de la pluralité d'aubes de soufflante (20) est augmenté pour des régions de vitesses de flux d'air ingéré inférieures (32) et diminué pour des régions de vitesses de flux d'air ingéré accrues (34).

5. Ensemble soufflante (16) ou moteur à turbine à gaz (18) selon l'une quelconque des revendications précédentes, dans lequel le mécanisme de pas (40) comprend un plateau oscillant (42) couplé à des mécanismes de pivotement (44) pour chacune de la pluralité d'aubes de soufflante (20), éventuellement dans lequel les mécanismes de pivotement (44) sont couplés à chacune de la pluralité d'aubes de soufflante (20).

6. Ensemble soufflante (16) ou moteur à turbine à gaz (18) tel que décrit dans l'une quelconque des revendications 1 à 4, dans lequel le mécanisme de pas (66) comprend une pluralité de moteurs électriques (62) couplés à un mécanisme de pivotement couplé à chacune de la pluralité d'aubes de soufflante (20).

7. Ensemble soufflante (16) ou moteur à turbine à gaz (18) comme cité dans l'une quelconque des revendications précédentes, dans lequel le mécanisme de pas (40, 66) peut modifier le pas de la pluralité d'aubes de soufflante (20) à une valeur négative uniforme pour produire une poussée inverse.

8. Procédé de fonctionnement d'un moteur à turbine à gaz (18) monté dans le fuselage d'aéronef (12), le procédé comprenant :
la modification d'un angle de pas (48, 50) pour chacune d'une pluralité d'aubes de soufflante (20) tournant dans une région de vitesse de flux d'air inférieure (32) pendant la rotation autour d'un axe de rotation (A) ; et
la modification de l'angle de pas pour chacune de la pluralité d'aubes de soufflante (20) tournant dans une région de vitesse de flux d'air plus élevée (34) pendant la rotation autour de l'axe de rotation (A), dans lequel la région de vitesse de flux d'air plus faible (32) comprend un flux d'air de couche limite (24) ingéré dans une soufflante dans une région circonférentielle partielle de soufflante.

9. Procédé tel que cité dans la revendication 8, dans lequel un mécanisme de pas (40) modifie l'angle de pas (48, 50) pour correspondre à une position circonférentielle de l'aube de soufflante.

10. Procédé tel que récité dans l'une quelconque des revendications 8 ou 9, dans lequel un ou le mécanisme de pas (40) modifie l'angle de pas (58) pour correspondre à une vitesse de flux d'air détectée dans une région circonférentielle de la soufflante.
